# EUROPEAN PATENT SPECIFICATION

(11) **EP 3 377 319 B1**
(45) Date of publication and mention of the grant of the patent: **05.01.2022**
(21) Application number: 16797754.5
(22) Date of filing: 15.11.2016
(51) Int. Cl.: B32B 27/10, B32B 27/32, B32B 27/34

(54) **METHOD FOR RIPENING OR HEAT TREATING PACKAGED FOOD**
VERFAHREN ZUR REIFUNG ODER WÄRMEBEHANDLUNG VON VERPACKTEN NAHRUNGSMITTELN
METHODE POUR FAIRE MURIR OU CHAUFFER UN ALIMENT EMBALLE

(30) Priority: 17.11.2015 EP 15003274
(43) Date of publication of application: 26.09.2018
(73) Proprietor: Amcor Flexibles France SAS, 92052 Paris La Defense Cedex (FR)
(72) Inventor: PROVOST, Jean-Jacques, 16300 Barret (FR); MARCHIVE, Lionel, 16300 Salles de Barbezieux (FR)
(74) Representative: Vossius & Partner Patentanwälte Rechtsanwälte mbB
(86) International application number: PCT/EP2016/025146
(87) International publication number: WO 2017/084762

(56) References cited:
- JP-A- 2000 318 094
- JP-A- 2002 308 320
- JP-A- 2005 154 004
- US-A- 4 461 420
- US-A1- 2004 137 202

## Description

The invention relates to a method for packing cheese wherein the cheese is allowed to ripen further when packed in a closed food receiving area of a packaging according to the preamble of claim 1.

Some cheese matures also when packed and release gases and water during the ripening process which may deform or destroy a packaging enclosing said cheese, but most cheeses do not ripen properly when packed, i.e. those cheeses do not develop their specific flavor and taste.

There are also food articles to be cooked in an already closed packaging. Those food articles usually release steam and gases during cooking which may deform or destroy a hermetically sealed packaging.

The object of the invention is a method for packing cheese allowing the cheese to ripen further when packed and/or heat treating foodhoused in a closed food receiving area of a packaging without generating an undesired deformation or a bursting of the packaging.

This objective is achieved by a method as described in claim 1. Preferred embodiments of the inventive method are described in the claims directly or indirectly depending on claim 1.

In order to allow cheese to ripen in the best possible conditions when packed, the packaging requires some breathability to manage an exchange of gases and water during the ripening process.

When heat treating food articles packed in a closed food receiving area of a packaging, the packaging may be deformed or even may burst due the increased inner gas pressure or due to gases emerging from the food during the heating process. Consequently, the packaging for food articles to be heat treated in the closed food receiving area of the packaging requires some breathability in order to avoid an undesired deformation or even a bursting of the packaging.

The packaging is preferably at least partly a flexible packaging.

US 4,461,420 A refers to a vapour outlet valve for packages consisting of a valve film welded to the inner surface of a capping film of the package in such a way that it is exposed when the capping film is torn off, wherein the valve film comprises a porous structure which promotes permeability to gas and vapour.

A breathable plastic packaging for packing oxygen sensitive products is known from EP-A-1782945 which uses a lid comprising a non-woven web having a high porosity. This packaging allows a very high oxygen transmission rate.

US 2004/137202 A1 discloses a multifunctional food wrap comprising a material web provided with a plurality of protrusions integral with the material web and having spaces therebetween. The food wrap further comprises an adhesive disposed within the spaces between the protuberances. and at least one secondary function. The secondary function may be a chemical or physical means and may be disposed within the adhesive, the material web or the protuberances.

JP 2000 318094 A describes a breathable packaging material usable for packaging oxygen scavengers, desiccants and the like providing excellent water resistance, oil resistance, appearance and design properties to eliminate exposure of a design layer and to improve hygienic quality by forming the design layer between a plastic film layer and a paper layer and forming pores in the film layer and an adhesive layer.

JP 2005 154004 A describes a packaging material for a desiccant, which has an excellent water-repellent property and high strength and wherein an ink of the printing layer does not adhere to or to come in contact with food.

Food articles to be ripened when packed in a closed food receiving area of a packaging, or food articles to be heat treated in a closed cavity of a packaging usually require a predefined gas permeability either for providing an optimal gas exchange during a further ripening process, or for providing a venting of a closed cavity containing a food article during its heat treatment while preventing the diffusion of the heating medium, e.g. water, steam or vapour, into the cavity of the food receiving area of the packaging. Consequently, the permeability needs to be chosen depending on the intended application.

The breathable film used in the inventive method is a laminate having an inner sealable plastic film facing the food receiving area and having an outer membrane made of a continuous, non-porous layer of paper bonded to the inner sealable plastic film by an adhesive layer, wherein the plastic film is perforated. The breathable film has a predefined permeability for the gases involved in the ripening or heat treatment process.

The packaging used for the inventive method allows balancing the gas and/ or vapour content within its closed food receiving area. Preferably, the breathable film is at least partly permeable for vapour, nitrogen, oxygen and carbon dioxide in both directions through the breathable film.

Said breathable film may be used as a lid film for producing a lid which may be sealed to a packaging tray. Said breathable film may also be sealed on itself or onto other films to produce a packaging having a closed internal volume. The breathable film may be used to produce VFFS (vertical form fill seal) or HFFS (horizontal form fill seal) packagings.

The breathable film used for the inventive method preferably has a certain predefined permeability to gases, in particular to steam (H₂O), nitrogen (N₂), oxygen (O₂) and carbon dioxide (CO₂) in both directions through a planar surface of the breathable film.

The oxygen transmission rate of the breathable film is preferably chosen to be between 4 and 10'000 cm³/m²/day measured at 23°C and 0% relative humidity.

The membrane in the form of a layer of paper preferably is a continuous, non-perforated layer of kraft paper, parchment paper, white machine glazed paper, calendered paper or coated paper. The paper has a preferred mass per unit area of between 18 to 170 g/m². In a further preferred embodiment, the paper comprises a further outer layer made of plastic or metallized plastic covering the outer face of the paper.

The membrane in the form of a continuous layer of paper may function as a filter for gases and/or vapour, wherein its filter characteristics depend on the composition of the paper and the thickness of the layer of paper.

Coated paper is a paper or carton having a surface that is coated by one or several layers comprising a compound or polymer to impart certain qualities to the paper, including weight, surface gloss, smoothness or reduced ink absorbency. Coating compounds for paper used in the packaging industry may comprise kaolinite, calcium carbonate, bentonite or talc. Furthermore, chalk or china clay may be bound to the paper with synthetic viscofiers, such as styrenebutadiene latexes and/or natural organic binders such as starch. The coating formulation may also contain chemical additives as dispersants, resins as e.g. PE to give water resistance and wet strength to the paper.

The perforated plastic film of the breathable film used for the inventive method preferably has between 1 and 3500 holes/dm², and the holes have a preferred cross section of 0.002 to 0.8 mm². Especially preferred breathable films used for the method have a perforated plastic film having between 1 to 500 holes/dm². The perforation consists preferably of a number of through-holes, i.e. only perforations or holes running from one side of the perforated plastic film to the other side of said plastic film are taken into account. The residual plastic film besides the through-holes preferably does not show any porosity.

The perforated plastic film is preferably made of polyester, polyamide, polypropylene, polyethylene or a blend thereof. Other preferred materials for the perforated plastic film are biopolymers such as polylactid acid (PLA) or Polyhydroxybutyrate (PHB) which is a polyhydroxyalkanoate (PHA). The film preferably is biaxially oriented, but casted or coextruded films are also preferred films.

The perforated plastic film preferably has a thickness of 5 to 300 µm and is especially preferred between 10 to 130 µm thick.

A preferred perforated plastic film used for the inventive method itself is heat sealable.

The adhesive between the perforated plastic film and the layer of paper preferably is made of polyurethane and/or of polyester resin, wherein the adhesive may be water or solvent based. The thickness of the adhesive layer typically is 6 µm or less.

The adhesive layer between the perforated plastic film and the layer of paper is preferably applied in the form of a continuous, full-faced layer so that the layer of paper and the plastic layers are fully glued together over the whole interface. In a further embodiment the adhesive layer between the perforated plastic film and the layer of paper is deposited in zones, i.e. in discrete regions, especially in case where there is not any additional heat-sealing layer applied, i.e. in case of the use of a heat-sealable perforated plastic film.

In an even further preferred breathable film used for the inventive method the adhesive layer between the perforated plastic film and the layer of paper does not cover the perforations. This allows a free gas exchange between the packaged food and the paper layer.

In a further preferred breathable film it comprises an additional outer plastic layer directly bonded to the free surface of the layer of paper using an outer adhesive layer. This outer adhesive layer may be patterned in the sense of an adhesive layer covering only predefined zones of the layer of paper.

In a still further preferred embodiment the free surface of the perforated plastic film, i.e. the surface of the perforated plastic film lying vis-à-vis the layer of paper, is coated with a layer of a heat-seal lacquer. Said layer of heat-seal lacquer may be a continuous layer or may be patterned. If the heat-seal lacquer is patterned, the pattern is preferably such that the heat-seal lacquer does not cover the perforation of the plastic film. This layer of heat-seal lacquer preferably can seal on PP, PS, APET, CPET, PE, aluminium or carton.

Zones of the adhesive layer lying between the perforated plastic film and the layer of paper are preferably located in areas of the breathable film not coated with a heat-seal lacquer, but the adhesive layer in the individual zones is always a continuous layer.

The packaging enclosing the food receiving area may be made of a lid consisting of a breathable film sealed onto a sealing flange of a packaging tray. In this case the food receiving area is preferably provided by a cavity of the packaging tray which - after the food has been placed in the cavity - is completely closed by sealing the lid onto the sealing flange of the packaging tray.

The packaging may also consist of one or more film parts made of a breathable film which are sealed together to form a closed internal volume enclosing the food article.

The breathable film allows balancing the gas and/or the steam content within the closed internal volume of the packaging enclosing the food. The thickness of the membrane and the number and the cross-sections of the perforation or holes in the inner sealable plastic film depend on the use of the packaging. The perforation is located in the perforated plastic film preferably in the unsealed region of the breathable film.

The sealed seam of said packaging may be a hermetical seal, a peelable or a resealable seal.

The method is especially suitable for heat treating ready-to-eat meals that is housed in a closed food receiving area of a packaging. The inventive method is preferably used for cooking or pasteurization of food articles at temperatures greater than 40°C within the internal volume of said closed packaging, wherein the thickness of the membrane, the form and the number and the cross sections of the perforations in the inner sealable plastic film are such that the permeability of the packaging is suitable for controlling the steam and gas content of the internal volume of said packaging.

The inventive method is also especially suitable for pasteurizing and/or packing cheese that is allowed to ripen further when packed in the closed food receiving area of the packaging. Said cheese is preferably a cream, processed or soft cheese.

The cheese ripening process occurs after the initial manufacturing process of the cheese and continuous until it is packaged. The duration of the ripening process is dependent on the type of cheese and the desired quality, but two weeks up to some months are generally required for most cheeses. Even after having been packaged hermetically sealed, most cheeses continue the ripening process, but may develop an unfavourable taste or flavour. Furthermore, packagings used in the prior art usually are deformed or burst due to the internal gas pressure that develops during the ripening process. If cheese is packed in a packaging as used according to the inventive method, the ripening process continues properly until it is finalized or until the cheese is consumed. The maximal shelf-life of packed cheese is much longer if ripened according to the invention. As an example, Camembert cheese packaged as done according to the prior art has a typical maximum shelf life of 12 days. If the Camembert is ripened according to the invention, its maximum shelf life is typically about 46 days.

The thickness of the membrane and the number and the cross-sections of the perforations in the plastic film are such that the gas content within the internal volume can be balanced during ripening of the cheese, i.e. the gas pressure within the closed volume comprising the cheese can be balanced with that outside the packaging and the gas mixture can be adjusted pursuant to the ripening process of the cheese in order to provide an ideal gas atmosphere for the packaged cheese during its whole storage period.

The breathable film allows an optimal gas exchange between the closed inner volume of the packaging enclosing the food article with the surrounding atmosphere during the whole heat treatment or ripening process. Depending on the kind of packed cheese, the ripening process typically may last between some days up to some months.

The CO₂ of the internal volume of the packaging comprising air and cheese typically varies from 0 vol.-% just after packing the cheese to an equilibrium concentration of about 5 to 14 vol.-%, wherein the O₂ concentration is reduced from about 21 vol.-% just after packing the cheese to about 0.01 vol.-% at equilibrium for example. The characteristics of the breathable film allow a further ripening of the cheese in optimal environment conditions in that the breathable film on the one hand allows escaping e.g. CO₂ out of the internal volume and on the other hand entering e.g. O₂ into the closed internal volume of the packaging comprising the cheese. Method wherein the breathable film (80, 83, 85, 88, 95) comprises an outer film (50) made of plastic, metallized plastic, reverse printed plastic or reverse printed metallized plastic directly bonded to the outer surface of the membrane (30) using an outer intermediate adhesive layer (40), wherein the outer adhesive layer (40) preferably is patterned in the sense of an adhesive layer covering only predefined zones of the membrane (30). Further, the breathable film (85, 88) comprises on its outer face a printing (70) and an overlacquer (75) for protecting the printing.

The method is especially suitable for ripening packaged processed or soft cheese, or cream cheese. Said packed cheese may first be pasteurized in the closed food receiving area of the packaging and may then be allowed to further ripen in the closed packaging.

The packaging used to perform the inventive method is further described by way of examples with reference to the accompanying drawings.
- Figure 1: shows a schematic perspective view of a perforated plastic film 10;
- Figure 2: shows schematically a cross-section of a breathable film having a patterned adhesive layer;
- Figure 3: shows schematically a cross-section of a breathable film having a continuous adhesive layer;
- Figure 4: shows schematically a cross-section of a further breathable film having a continuous adhesive layer and a heat-sealing layer;
- Figure 5: shows schematically a cross-section of a breathable film having a patterned adhesive layer between a heat-sealable, perforated plastic film and a layer of paper;
- Figure 6: shows schematically a cross-section of a still further breathable film having a separate sealing layer and a continuous adhesive layer between a perforated plastic film and a layer of paper;
- Figure 7: shows schematically a cross-section of a breathable film similar to that shown in fig. 6, but having a patterned adhesive layer between a heat-sealable, perforated plastic film and a layer of paper;
- Figure 8: shows a further cross-section of a breathable film having a patterned adhesive layer between a heat-sealable, perforated plastic film and a layer of paper and comprising a reverse printed outer layer.

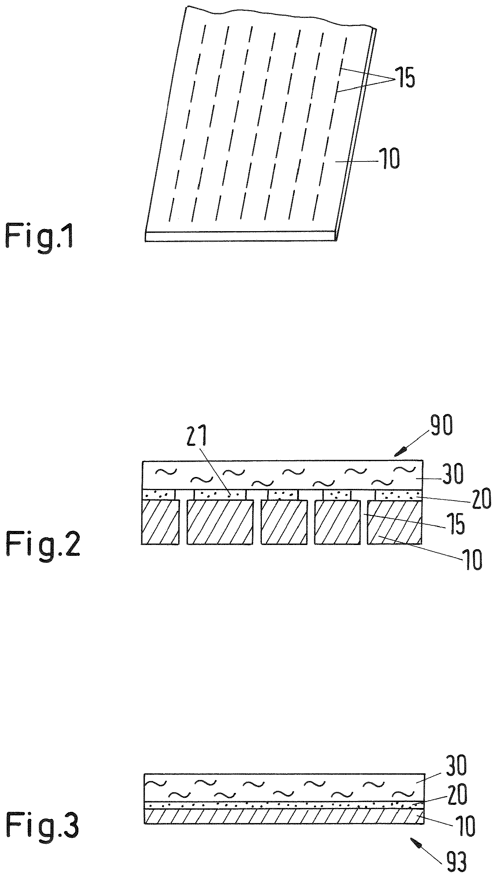

The perforated plastic film 10 shown in figure 1 has several lines of perforation, wherein each line has a number of longitudinal short cuts 15. For a specific application of the breathable film the number of perforations of the perforated film is adjusted to the specific requirements of the packaged food article. The cuts can also be replaced by e.g. round or polygonal bores. Moreover the number, form and distribution of the perforation may vary depending on the required permeability of the perforated plastic film 10. The perforation has to be in the form of through holes or slits 15 penetrating the complete thickness of the plastic film 10.

Figure 2 shows a cross-section of a breathable film 90. The breathable film 90 is a laminate comprising a perforated plastic film 10 having perforations 15 and a membrane 30 in the form of a continuous layer of paper, wherein said layer of paper 30 and the perforated plastic film 10 are glued together by a patterned adhesive layer 20, i.e. the adhesive is deposited between the layer of paper 30 and the perforated plastic film 10 in zones 21 not covering the perforations 15. The material of perforated plastic film 10 is heat-sealable.

The breathable film 90 shown in fig. 2 may be used as lid material that is sealed onto itself or onto a package tray, wherein a packaged food article is enclosed within said packaging. When using a breathable film 90 as shown in fig. 2 for packaging a food article, a free flow of gases is allowed from the inside of the packaging on the side of the perforated plastic film 10 to the layer of paper 30 located on the outside of the packaging.

Figure 3 shows a cross-section of a breathable film 93 similar to that shown in fig. 2. The breathable film 93 represents a laminate comprising a perforated plastic film 10 (perforations of plastic film 10 are not shown) and a membrane 30 in the form of a continuous layer of paper, wherein said layer of paper 30 and the perforated plastic film 10 are glued together by a continuous adhesive layer 20. The perforated plastic film 10 and the adhesive layer 20 are shown schematically as continuous layers, but in fact at least the perforated plastic film 10, but preferably also the adhesive layer 20, have at least one through-hole as perforation.

The breathable film 93 shown in figure 3 is suitable for fabricating a packaging for food articles. The breathable film 93 may be used as lid material that is e.g. sealed to a packaging tray. The breathable film may also be used to produce breathable packaging made of two or more films sealed together to form a closed internal volume comprising a food article. Said packaging may be used either for cooking or pasteurizing the food article at temperatures greater than e.g. 40°C, and/or for packing soft cheese which is allowed to ripen under optimal environment conditions. The required gas and vapour permeation characteristics of said packaging depend on the packed food and can be adjusted by choosing the paper material, thickness of paper layer and the perforation 15 of the plastic film 10. The layer of paper 30 is chosen as to the required vapour and/or gas absorption capacity for providing e.g. optimal conditions for ripening of a soft or cream cheese.

In order to allow some overpressure in the internal volume of a packaging made of a breathable film 90 or 93 as it may be required for food articles that have to be cooked inside said closed volume, the perforation 15 has to be chosen to limit the gas and vapour flow out of the internal volume, but the perforated plastic film 10 as well as the sealed seams have to withstand the overpressure and therefore have to provide a certain predefined tear strength.

The mechanical tear strength of the breathable film 90 or 93 is mainly governed by the tear strength of the perforated plastic film.

On the other hand, the perforation 15 and the layer of paper 30 have to provide some compensation of the vapour and gas pressure when the food article in the internal volume of the packaging is cooled. Therefore, during the cooling phase the vapour and gas on the one hand should be allowed to flow through the perforation of the plastic film inside the internal volume of a closed packaging and on the other hand the layer of paper may be allowed to release some gases and vapour.

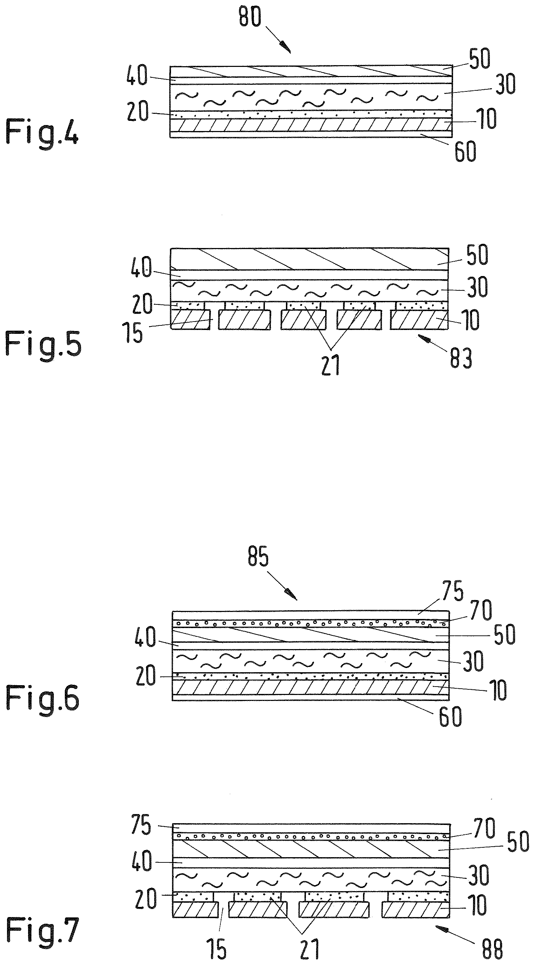

Figure 4 shows a breathable film 80 especially suitable for packing soft or cream cheese that is allowed to ripe further when packed. The breathable film 80 is a laminate comprising a continuous, non-porous layer of paper 30 and a perforated plastic film 10 (perforations not shown), wherein both films 10, 30 are bonded together by a layer of adhesive 20. The breathable film 80 further comprises an additional outer layer 50 directly bonded to the free surface of the layer of paper 30 using an outer adhesive layer 40. Outer layer 50 may be of plastic or may be a metallized plastic layer. The adhesive layers 20 and/or 40 may be patterned in the sense of an adhesive layer covering only predefined zones of the layer of paper 30. Furthermore, on the free surface of the perforated plastic film 10 the breathable film 80 comprises a continuous layer of a heat-seal lacquer 60. When the breathable film 80 is formed to a packaging by sealing different parts of a breathable film to form a closed food receiving area or by sealing a breathable film onto a sealing flange of a packaging tray, the heat-seal layer 60 represents the inner layer of the packaging, i.e. the heat-seal layer may contact the food article.

The outer adhesive layer 40 may be an ink layer and the outer plastic layer 50 may be an overlacquer layer for protecting the printing of the ink layer 40.

Figure 5 shows a further breathable film 83 especially suitable for packing soft or cream cheese that is allowed to ripe further when packed. The breathable film 83 is a laminate comprising a continuous, non-porous layer of paper 30 and a perforated plastic film 10 comprising through-holes 15 as perforation. The perforated plastic film 10 is heat-sealable. The films 10, 30 are bonded together by a layer of adhesive 20, wherein the adhesive 20 is deposited in zones 21 avoiding at least partly any adhesive coverage of the through-holes 15 of the perforated plastic film 10. The breathable film 83 further comprises an additional outer layer 50 directly bonded to the free surface of the layer of paper 30 using an outer adhesive layer 40. Outer layer 50 may be of plastic or metallized plastic. The adhesive layers 20 and/or 40 may be patterned in the sense of an adhesive layer covering only predefined zones of the layer of paper 30. When the breathable film 83 is sealed onto a packaging tray or sealed on itself or on other packaging films to form a packaging having a closed internal volume comprising the food article, the perforated plastic film 10 represents the inner layer of the breathable film 83, i.e. the perforated plastic film 10 may contact the food article inside the packaging.

In a preferred embodiment the outer adhesive layer 40 may be an ink layer and the outer plastic layer 50 may be an overlacquer layer for protecting the printing of the ink layer.

A further preferred breathable film 85 is shown in figure 6. The breathable film 85 has the same basic structure as that shown in figure 4, i.e. comprises a continuous, non-porous layer of paper 30 and a perforated plastic film 10 (perforations not shown), wherein both films 10, 30 are bonded together by a layer of adhesive 20. The breathable film 85 also comprises an additional outer layer 50 directly bonded to the layer of paper 30 using an outer adhesive layer 40. Outer layer 50 may be of plastic or may be a metallized plastic layer. This outer adhesive layer 40 may be patterned in that it covers only predefined zones of the layer of paper 30. The surface of the perforated plastic film 10 opposite to the layer of paper 30 again comprises a continuous layer of a heat-seal lacquer 60. Additionally to the breathable film 80 shown in fig. 4 the outer layer 50 of the breathable film 85 provides an outer free surface that is smooth for receiving a printing 70. The printing layer 70 is covered by an overlacquer layer 75. When the breathable film 85 is sealed to form a packaging enclosing a closed food receiving area comprising the food article, the heat-seal layer 60 represents the inner layer of the packaging, i.e. the heat-seal layer may contact the food article.

A further preferred breathable film 88 is shown in figure 7. The breathable film 88 comprises a continuous, non-porous layer of paper 30 and a perforated, heat-sealable plastic film 10 comprising through-holes 15, wherein both films 10, 30 are bonded together by a layer of adhesive 20. The adhesive layer 20 is deposited in zones 21 avoiding at least partly coverage of the through-holes 15 of the perforated plastic film 10 by the adhesive. The breathable film 88 also comprises an additional outer layer 50 directly bonded to the layer of paper 30 using an outer adhesive layer 40. Outer layer 50 may be of plastic or may be an aluminium layer. This outer adhesive layer 40 may be a continuous layer or may be patterned in that it covers only predefined zones of the layer of paper 30. The outer layer 50 provides an outer free surface that is smooth for receiving a printing 70. The printing layer 70 is covered by an overlacquer layer 75. When the breathable film 88 is sealed to form a packaging enclosing a closed food receiving area comprising the food article, the heat-sealable perforated plastic layer 10 represents the inner layer of the packaging, i.e. the perforated plastic layer 10 may contact the food article.

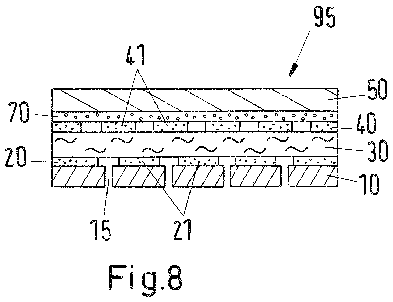

The cross-section of a further breathable film 95 shown in figure 8 comprises a patterned adhesive layer 20 deposited onto the layer of paper 30 in zones 21 and lying between a heat-sealable, perforated plastic film 10 and the layer of paper 30. The heat-sealable, perforated plastic layer 10 comprises through-holes 15 as perforation. The zones 21 of the adhesive layer 20 are located such that the through-holes 15 of the perforated plastic layer 10 remain open against the layer of paper 30. The other side of the layer of paper 30 opposite to the perforated plastic film 10 comprises an outer patterned adhesive layer 40, i.e. the outer adhesive layer 40 is deposited onto the layer of paper 30 in zones 41. The outer adhesive layer 40 serves to glue a reverse printed outer plastic layer 50. Consequently, the ink layer 70 of the reverse printed outer layer 50 is directly bonded to the layer of paper 30 by the outer adhesive layer 40. The adhesive layer 20 between the layer of paper 30 and the perforated plastic layer 10 as well as the outer adhesive layer 40 can be patterned as shown in fig. 8, or can constitute continuous adhesive layers 20, 40.

## Claims

1. Method for packing cheese wherein the cheese is allowed to ripen further when packed in a closed food receiving area of a packaging, wherein the gas pressure within the closed volume comprising the cheese is balanced with that outside the packaging and the gas mixture within said closed volume is adjusted pursuant to the ripening process of the cheese to provide an ideal gas atmosphere for the packaged cheese during its whole storage period,
**characterised in that**
the cheese is packed in an inner food receiving area of the packaging and the food receiving area of the packaging containing the cheese is then closed by a sealing procedure, wherein the packaging is at least partly made of a breathable film (80, 83, 85, 88, 90, 93, 95) that is at least partly permeable for vapour, nitrogen, oxygen and carbon dioxide in both directions through the breathable film, wherein the breathable film (80, 83, 85, 88, 90, 93, 95) is a laminate having an inner sealable plastic film (10) facing the food receiving area and having an outer membrane (30) made of a continuous, non-porous layer of paper bonded to the inner sealable plastic film (10) by a continuous or patterned adhesive layer (20) and wherein the inner sealable plastic film (10) is perforated.

2. Method according to claim 1, wherein the inner sealable plastic film (10) is a plastic film having an innermost layer of a sealing lacquer (60) facing the food receiving area.

3. Method according to claim 1, wherein the cheese is a cream cheese or a soft cheese.

4. Method according to one of claims 1 to 3, wherein the food receiving area is formed by a thermoformed packaging tray having a food receiving cavity surrounded by a sealing flange, wherein said cavity is capped with a lid consisting of the breathable film (80, 83, 85, 88, 90, 93, 95).

5. Method according to claim 4, wherein the sealing of the lid to the sealing flange of the packaging tray is a hermetic sealing.

6. Method according to one of claims 1 to 5, wherein the paper of the outer membrane (30) is a kraft paper, a parchment paper, a white machine glazed paper, a calendered paper or a coated paper, preferably having a mass per unit area of between 18 to 170 g/m².

7. Method according to one of claims 1 to 6, wherein the inner sealable plastic film (10) has between 1 and 3500 holes/dm², preferably 1 to 500 holes/dm², wherein the holes preferably have a cross section of 0.002 to 0.8 mm².

8. Method according to one of claims 1 to 7, wherein the inner sealable plastic film (10) is made of polyester, polyamide, polypropylene, polyethylene or a blend of aforementioned plastics, or is made of a biopolymer such as polylactid acid (PLA) or Polyhydroxybutyrate (PHB).

9. Method according to one of claims 1 to 8, wherein the inner sealable plastic film (10) has a thickness of 5 to 300 µm, preferably between 10 to 130 µm.

10. Method according to one of claims 1 to9, wherein the adhesive layer (20) between the inner sealable plastic film (10) and the membrane (30) is made of polyurethane and/or of polyester resin and preferably has a thickness of 6 µm or less.

11. Method according to one of claims 1 to 10, wherein the adhesive layer (20) between the inner sealable plastic film (10) and the membrane (30) is patterned and is preferably deposited in zones (21) not covering the perforations (15) of the inner sealable plastic film (10).

12. Method according to one of claims 1 to 11, wherein the breathable film (80, 83, 85, 88, 95) comprises an outer film (50) made of plastic, metallized plastic, reverse printed plastic or reverse printed metallized plastic directly bonded to the outer surface of the membrane (30) using an outer intermediate adhesive layer (40), wherein the outer adhesive layer (40) preferably is patterned in the sense of an adhesive layer covering only predefined zones of the membrane (30).

13. Method according to one of claims 1 to 12, wherein the breathable film (85, 88) comprises on its outer face a printing (70) and an overlacquer (75) for protecting the printing.

## Patentansprüche

1. Verfahren zum Verpacken von Käse, wobei der Käse, wenn in einem geschlossenen Lebensmittelaufnahmebereich einer Verpackung verpackt, weiter reifen gelassen wird, wobei der Gasdruck in dem geschlossenen Volumen, das den Käse umfasst, mit jenem außerhalb der Verpackung ausgeglichen wird und das Gasgemisch in dem geschlossenen Volumen dem Reifungsvorgang des Käses entsprechend eingestellt wird, um eine ideale Gasatmosphäre für den verpackten Käse während seines gesamten Lagerungszeitraums bereitzustellen,
**dadurch gekennzeichnet, dass**
der Käse in einen inneren Lebensmittelaufnahmebereich der Verpackung gepackt wird und der Lebensmittelaufnahmebereich der Verpackung, der den Käse enthält, anschließend durch ein Siegelverfahren verschlossen wird, wobei die Verpackung wenigstens zum Teil aus einer atmungsfähigen Folie (80, 83, 85, 88, 90, 93, 95) besteht, die für Dampf, Stickstoff, Sauerstoff und Kohlendioxid in beiden Richtungen durch die atmungsfähige Folie wenigstens teilweise durchlässig ist, wobei die atmungsfähige Folie (80, 83, 85, 88, 90, 93, 95) ein Laminat ist, das eine innere siegelfähige Kunststofffolie (10) aufweist, die zu dem Lebensmittelaufnahmebereich zeigt, und eine äußere Membran (30) aufweist, die aus einer kontinuierlichen nichtporösen Schicht aus Papier besteht, die durch eine kontinuierliche oder strukturierte Klebstoffschicht (20) an die innere siegelfähige Kunststofffolie (10) gebunden ist, und wobei die innere siegelfähige Kunststofffolie (10) perforiert ist.

2. Verfahren gemäß Anspruch 1, wobei die innere siegelfähige Kunststofffolie (10) eine Kunststofffolie ist, die eine innerste Schicht aus einem Versiegelungslack (60), die zu dem Lebensmittelaufnahmebereich zeigt, aufweist.

3. Verfahren gemäß Anspruch 1, wobei der Käse ein Frischkäse oder ein Weichkäse ist.

4. Verfahren gemäß einem der Ansprüche 1 bis 3, wobei der Lebensmittelaufnahmebereich aus einer warmgeformten Verpackungsschale gebildet ist, die eine Lebensmittelaufnahmevertiefung aufweist, die von einem Versiegelungsflansch umgeben ist, wobei die Vertiefung mit einem Deckel abgeschlossen ist, der aus der atmungsfähigen Folie (80, 83, 85, 88, 90, 93, 95) besteht.

5. Verfahren gemäß Anspruch 4, wobei das Siegeln des Deckels an den Versiegelungsflansch der Verpackungsschale ein hermetisches Siegeln ist.

6. Verfahren gemäß einem der Ansprüche 1 bis 5, wobei das Papier der äußeren Membran (30) ein Kraft-Papier, ein Pergamentpapier, ein weißes maschinengeglättetes Papier, ein kalandriertes Papier oder ein beschichtetes Papier ist, das vorzugsweise eine Masse pro Flächeneinheit von zwischen 18 und 170 g/m² aufweist.

7. Verfahren gemäß einem der Ansprüche 1 bis 6, wobei die innere siegelfähige Kunststofffolie (10) zwischen 1 und 3500 Löcher/dm², vorzugsweise 1 bis 500 Löcher/dm², aufweist, wobei die Löcher vorzugsweise einen Querschnitt von 0,002 bis 0,8 mm² aufweisen.

8. Verfahren gemäß einem der Ansprüche 1 bis 7, wobei die innere siegelfähige Kunststofffolie (10) aus Polyester, Polyamid, Polypropylen, Polyethylen oder einem Gemisch der genannten Kunststoffe besteht oder aus einem Biopolymer, wie z. B. Polymilchsäure (PLA) oder Polyhydroxybutyrat (PHB), besteht.

9. Verfahren gemäß einem der Ansprüche 1 bis 8, wobei die innere siegelfähige Kunststofffolie (10) eine Dicke von 5 bis 300 µm, vorzugsweise zwischen 10 und 130 µm, aufweist.

10. Verfahren gemäß einem der Ansprüche 1 bis 9, wobei die Klebstoffschicht (20) zwischen der inneren siegelfähigen Kunststofffolie (10) und der Membran (30) aus Polyurethan und/oder aus Polyesterharz besteht und vorzugsweise eine Dicke von 6 µm oder weniger aufweist.

11. Verfahren gemäß einem der Ansprüche 1 bis 10, wobei die Klebstoffschicht (20) zwischen der inneren siegelfähigen Kunststofffolie (10) und der Membran (30) strukturiert ist und vorzugsweise in Zonen (21) aufgebracht ist, die die Perforationen (15) der inneren siegelfähigen Kunststofffolie (10) nicht bedecken.

12. Verfahren gemäß einem der Ansprüche 1 bis 11, wobei die atmungsfähige Folie (80, 83, 85, 88, 95) eine äußere Folie (50) umfasst, die aus Kunststoff, metallisiertem Kunststoff, konterbedrucktem Kunststoff oder konterbedrucktem metallisiertem Kunststoff besteht, die unter Verwendung einer äußeren dazwischenliegenden Klebstoffschicht (40) direkt an die äußere Oberfläche der Membran (30) gebunden ist, wobei die äußere Klebstoffschicht (40) vorzugsweise in dem Sinn einer Klebstoffschicht, die nur vordefinierte Zonen der Membran (30) bedeckt, strukturiert ist.

13. Verfahren gemäß einem der Ansprüche 1 bis 12, wobei die atmungsfähige Folie (85, 88) an ihrer Außenseite einen Aufdruck (70) und einen Überzugslack (75) zum Schutz des Aufdrucks umfasst.

## Revendications

1. Procédé d'emballage de fromage dans lequel le fromage peut s'affiner davantage quand il est emballé dans une zone de réception d'aliment fermée d'un emballage, dans lequel la pression gazeuse à l'intérieur du volume fermé comprenant le fromage est équilibrée avec celle à l'extérieur de l'emballage et le mélange gazeux à l'intérieur dudit volume fermé est ajusté conformément au processus d'affinage du fromage pour fournir une atmosphère gazeuse idéale pour le fromage emballé pendant toute sa période de conservation,
**caractérisé en ce que**
le fromage est emballé dans une zone de réception d'aliment interne de l'emballage et la zone de réception d'aliment de l'emballage contenant le fromage est alors fermée par une technique de scellage, dans lequel l'emballage est au moins partiellement composé d'un film respirant (80, 83, 85, 88, 90, 93, 95) qui est au moins partiellement perméable à la vapeur, à l'azote, à l'oxygène et au dioxyde de carbone dans les deux directions à travers le film respirant, dans lequel le film respirant (80, 83, 85, 88, 90, 93, 95) est un stratifié comportant un film en plastique scellable interne (10) tourné vers la zone de réception d'aliment et possédant une membrane externe (30) composée d'une couche continue non poreuse de papier collée au film en plastique scellable interne (10) par une couche adhésive continue ou à motif (20) et dans lequel le film en plastique scellable interne (10) est perforé.

2. Procédé selon la revendication 1, dans lequel le film en plastique scellable interne (10) est un film en plastique comportant une couche la plus interne d'un vernis de scellage (60) faisant face à la zone de réception d'aliment.

3. Procédé selon la revendication 1, dans lequel le fromage est un fromage à la crème ou un fromage à pâte molle.

4. Procédé selon l'une des revendications 1 à 3, dans lequel la zone de réception d'aliment est formée par un plateau d'emballage thermoformé comportant une cavité de réception d'aliment entourée par une bride de scellage, dans lequel ladite cavité est recouverte d'un couvercle constitué du film respirant (80, 83, 85, 88, 90, 93, 95).

5. Procédé selon la revendication 4, dans lequel le scellage du couvercle à la bride de scellage du plateau d'emballage est un scellage hermétique.

6. Procédé selon l'une des revendications 1 à 5, dans lequel le papier de la membrane externe (30) est un papier kraft, un papier sulfurisé, un papier blanc frictionné sur machine, un papier calandré ou un papier couché, de préférence ayant une masse par unité de surface entre 18 et 170 g/m².

7. Procédé selon l'une des revendications 1 à 6, dans lequel le film plastique scellable interne (10) comporte entre 1 et 3 500 trous/dm², de préférence 1 à 500 trous/dm², dans lequel les trous ont de préférence une coupe transversale de 0,002 à 0,8 mm².

8. Procédé selon l'une des revendications 1 à 7, dans lequel le film en plastique scellable interne (10) est en polyester, polyamide, polypropylène, polyéthylène ou un mélange des plastiques susmentionnés, ou est en biopolymère tel que l'acide polylactique (PLA) ou le polyhydroxybutyrate (PHB).

9. Procédé selon l'une des revendications 1 à 8, dans lequel le film en plastique scellable interne (10) a une épaisseur de 5 à 300 µm, de préférence entre 10 et 130 µm.

10. Procédé selon l'une des revendications 1 à 9, dans lequel la couche adhésive (20) entre le film plastique scellable interne (10) et la membrane (30) est en résine de polyuréthane et/ou de polyester et a de préférence une épaisseur inférieure ou égale à 6 µm.

11. Procédé selon l'une des revendications 1 à 10, dans lequel la couche adhésive (20) entre le film plastique scellable interne (10) et la membrane (30) est à motif et est de préférence déposée dans des zones (21) ne couvrant pas les perforations (15) du film plastique scellable interne (10).

12. Procédé selon l'une des revendications 1 à 11, dans lequel le film respirant (80, 83, 85, 88, 95) comprend un film externe (50) en plastique, en plastique métallisé, en plastique imprimé au verso ou en plastique métallisé imprimé au verso directement collé à la surface externe de la membrane (30) à l'aide d'une couche adhésive intermédiaire externe (40), dans lequel la couche adhésive externe (40) est de préférence à motif au sens d'une couche adhésive ne recouvrant que des zones prédéfinies de la membrane (30).

13. Procédé selon l'une des revendications 1 à 12, dans lequel le film respirant (85, 88) comprend sur sa face externe une impression (70) et un surlaquage (75) pour protéger l'impression.
